# FASCICULE DE BREVET EUROPEEN

(11) **EP 2 178 808 B1**
(45) Date de publication et mention de la délivrance du brevet: **11.10.2017**
(21) Numéro de dépôt: 08828515.0
(22) Date de dépôt: 21.08.2008
(51) Int. Cl.: C04B 35/484, C04B 35/657, C03B 5/43

(54) **PRODUIT REFRACTAIRE A FORTE TENEUR EN ZIRCONE DOPE**
REFRAKTÄRES MATERIAL MIT HOHEN ANTEIL VON DOTIERTEM ZIRKONOXID
REFRACTORY MATERIAL WITH A HIGH CONTENT OF DOPED ZIRCONIA

(30) Priorité: 24.08.2007 FR 0757178
(43) Date de publication de la demande: 28.04.2010
(73) Titulaire: Saint-Gobain Centre de Recherches et d'Etudes Européen, 92400 Courbevoie (FR)
(72) Inventeur: CABODI, Isabelle, F-84300 Cavaillon (FR); GAUBIL, Michel, F-30133 Les Angles (FR)
(74) Mandataire: Nony
(86) Numéro de dépôt international: PCT/FR2008/051515
(87) Numéro de publication internationale: WO 2009/027610

(56) Documents cités:
- WO-A-03/074445
- WO-A-2005/068393
- FR-A- 2 897 861
- FR-A- 2 897 862
- JP-A- 2000 302 560
- JP-A- 2003 292 382
- US-A- 4 507 394
- US-A- 5 466 643

## Description

L'invention concerne un nouveau produit réfractaire fondu et coulé à forte teneur en zircone.

Parmi les produits réfractaires, on distingue les produits fondus et coulés, bien connus pour la construction des fours de fusion du verre, et les produits frittés.

A la différence des produits frittés, tels que décrits par exemple dans US 4,507,394, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Une composition mise au point pour fabriquer un produit fritté n'est donc pas *a priori* utilisable telle quelle pour fabriquer un produit fondu et coulé, et réciproquement.

Les produits fondus et coulés, souvent appelés électrofondus, sont obtenus par fusion d'un mélange de matières premières appropriées dans un four à arc électrique ou par toute autre technique adaptée à ces produits. Le liquide fondu est ensuite coulé dans un moule puis le produit obtenu subit un cycle de refroidissement contrôlé pour être amené à température ambiante sans fracturation. Cette opération est appelée « recuisson » par l'homme de l'art.

Parmi les produits fondus et coulés, les produits électrofondus à forte teneur en zircone, c'est-à-dire comportant plus de 85 % en poids de zircone (ZrO₂), sont réputés pour leur qualité de très grande résistance à la corrosion sans coloration du verre produit et sans génération de défauts.

Classiquement, les produits fondus et coulés à forte teneur en zircone comportent également de l'oxyde de sodium (Na₂O) pour éviter la formation de zircon à partir de la zircone et de la silice présentes dans le produit. La formation de zircon est en effet néfaste puisqu'elle s'accompagne d'une diminution de volume de l'ordre de 20 %, créant ainsi des contraintes mécaniques à l'origine de fissures.

Le produit ER-1195 produit et commercialisé par la Société Européenne des Produits Réfractaires et couvert par le brevet EP-B-403 387 est aujourd'hui largement utilisé dans les fours de fusion du verre. Sa composition chimique comprend environ 94 % de zircone, 4 à 5 % de silice, environ 1 % d'alumine, 0,3 % d'oxyde de sodium et moins de 0,05 % en poids de P₂O₅. Elle est typique des produits à forte teneur en zircone utilisés pour les fours verriers.

FR 2 701 022 décrit des produits fondus et coulés à forte teneur en zircone qui contiennent 0,05 à 1,0 % en poids de P₂O₅ et 0,05 à 1,0 % en poids d'oxyde de bore B₂O₃. Ces produits présentent une résistivité électrique élevée. Cela permet avantageusement de stabiliser la consommation électrique lors de la fusion électrique du verre et surtout d'éviter tout problème de court circuit dans les réfractaires entraînant leur dégradation rapide. En effet, lors de la fusion électrique du verre une partie du courant électrique passe à travers les produits réfractaires. L'augmentation de la résistivité de ces produits réfractaires permet donc de réduire la quantité de courant électrique susceptible de les parcourir.

WO 2005 068393 décrit des produits fondus et coulés à forte teneur en zircone présentant une résistivité électrique élevée tout en minimisant les teneurs en BaO, SrO, MgO, CaO, P₂O₅, Na₂O et K₂O. Ces produits contiennent 0,1 à 1,2 % en poids de B₂O₃.

JP 2000 302 560 décrit des produits fondus et coulés qui ne contiennent pas Nb₂O₅ ou Ta₂O₅.

US 5,466,643 décrit un produit fondu et coulé, à forte teneur en zircone, qui ne contient pas de Nb₂O₅ ou Ta₂O₅.

L'actuel développement de verres de très haute qualité, en particulier des verres pour écrans plats de type LCD, augmente les exigences pour les produits réfractaires des fours de fusion du verre. En particulier, il existe un besoin pour des produits réfractaires présentant une résistivité électrique encore améliorée tout en conservant une bonne faisabilité et un bon comportement à l'application.

La présente invention vise à satisfaire ce besoin.

Plus particulièrement, selon un premier aspect, l'invention concerne un produit réfractaire fondu et coulé à forte teneur en zircone comportant, en pourcentages massiques sur la base des oxydes :
- ZrO₂ + HfO₂ : > 85 %
- SiO₂ : 6 % à 12 %
- Al₂O₃ : 0,4 % à 1 %
- Y₂O₃ : ≤ 0,2 %,
- un dopant choisi dans le groupe formé par Nb₂O₅, Ta₂O₅ et leurs mélanges.

Comme on le verra plus loin, de manière surprenante, les inventeurs ont découvert que cette composition permet au produit réfractaire selon l'invention de présenter une résistivité électrique remarquable, tout en conservant une bonne faisabilité et un bon comportement à l'application.

Le produit réfractaire selon l'invention peut alors encore comporter une ou plusieurs des caractéristiques optionnelles suivantes :
- Le rapport molaire ZrO₂/(Nb₂O₅ + Ta₂O₅) est supérieur à 200, et/ou inférieur à 350.
- La quantité totale de dopant est supérieure ou égale à 0,2 %, de préférence supérieure ou égale à 0,25 % et/ou inférieure ou égale à 5 %, inférieure ou égale à 3 %, inférieure ou égale à 1 %, inférieure ou égale à 0,8 %, inférieure ou égale à 0,5 %, de préférence inférieure ou égale à 0,4 %, en pourcentages molaires sur la base des oxydes.
- La quantité massique de dopant Ta₂O₅ est supérieure ou égale à 0,1 %, de préférence supérieure ou égale à 0,2 %, et/ou inférieure ou égale à 2,5 %, de préférence inférieure ou égale à 1,5 %.
- La quantité massique de dopant Nb₂O₅ est supérieure ou égale à 0,1 %, de préférence supérieure ou égale à 0,2 %, et/ou inférieure ou égale à 1,5 %, de préférence inférieure ou égale à 1,0 %.
- Au moins 80 %, de préférence au moins 90 %, voire au moins 99 % ou sensiblement 100 % de la zircone est monoclinique non stabilisée, en pourcentages en masse.
- La quantité massique de silice SiO₂ est supérieure ou égale à 6,5 %, de préférence supérieure ou égale à 7 %. Elle peut être inférieure ou égale à 10 %, voire inférieure ou égale à 9 %. En variante, elle peut être également supérieure à 8,5 %, voire 9 %, voire 10 %, voire même supérieure à 10,1 %, ou même à 10,5 %.
- La quantité massique d'oxyde de bore B₂O₃ est supérieure ou égale à 0,2 %, de préférence supérieure ou égale à 0,3 % et/ou inférieure ou égale à 1,0 %, de préférence inférieure ou égale à 0,8 %.
- La quantité massique d'oxyde de sodium Na₂O est inférieure ou égale à 0,1 %, de préférence inférieure ou égale à 0,05 %, de préférence encore inférieure ou égale à 0,03 %.
- La quantité massique d'alumine Al₂O₃ est de préférence supérieure ou égale à 0,5 % et/ou de préférence inférieure ou égale à 0,8 %.
- Les espèces autres que ZrO₂ + HfO₂, SiO₂, B₂O₃, Al₂O₃, Y₂O₃, BaO, Ta₂O₅ et Nb₂O₅ représentent, en masse, moins de 1,5 %, de préférence moins de 1 %, de préférence encore moins de 0,5 %.
- Les espèces autres que ZrO₂ + HfO₂, SiO₂, B₂O₃, Al₂O₃, Y₂O₃, Ta₂O₅ et Nb₂O₅ représentent, en masse, moins de 1,5 %, de préférence moins de 1 %, de préférence encore moins de 0,5 %.
- La quantité massique d'oxyde de barium BaO est inférieure ou égale à 0,6 %, de préférence inférieure à 0,5 %.
- Le complément massique à 100 % est constitué par des impuretés, la teneur totale en impuretés étant de préférence inférieure à 0,5%.
- Le produit réfractaire présente la composition massique suivante, avec ZrO₂ + HfO₂ et les impuretés comme complément à 100 % :
   - SiO₂ : 7% à 9%
   - B₂O₃ : 0,3 % à 0,8 %
   - Al₂O₃ : 0,4 % à 0,8 %
   - Y₂O₃ : ≤ 0,2 %
   - entre 0,2 % et 1,5 % de Ta₂O₅ et/ou entre 0,2 % et 1,0 % de Nb₂O₅.

Avantageusement, ces caractéristiques permettent d'améliorer encore la résistivité électrique et la résistance à la corrosion du produit selon l'invention.

Le produit réfractaire selon l'invention présente une résistivité électrique supérieure ou égale à 500 Ω.cm, de préférence supérieure ou égale à 600 Ω.cm, à 1500 °C à la fréquence de 100Hz.

Selon un autre aspect, l'invention concerne un produit réfractaire fondu et coulé à forte teneur en zircone comportant, en pourcentages massiques sur la base des oxydes :
- ZrO₂ + HfO₂ : > 85 %
- SiO₂ : 6 % à 12 %
- Y₂O₃ : ≤ 0,2 %,
- un dopant choisi parmi Ta₂O₅, Nb₂ O₅ et, de préférence, les mélanges de Nb₂O₅ et Ta₂O₅, avec Nb₂O₅ > 0,1 % et, dans le cas des mélanges Nb₂O₅ et Ta₂O₅, Ta₂O₅ > 0,1 %, en pourcentages massiques sur la base des oxydes, et, dans le cas où Ta₂O₅ est le seul dopant, Ta₂O₅ ≤ 1,5 %.

Le produit réfractaire selon l'invention peut alors encore comporter une ou plusieurs des caractéristiques optionnelles suivantes.
- Le rapport molaire ZrO₂ / (Nb₂O₅+Ta₂O₅) est compris entre 200 et 350.
- La quantité totale de dopant est supérieure ou égale à 0,2 %, de préférence supérieure ou égale à 0,25 % et/ou inférieure ou égale à 5 %, inférieure ou égale à 3 %, inférieure ou égale à 1 %, inférieure ou égale à 0,8 % inférieure ou égale à 0,5 %, de préférence inférieure ou égale à 0,4 % , en pourcentages molaires sur la base des oxydes.
- La quantité massique de dopant Ta₂O₅ est supérieure ou égale à 0,2 %, et/ou inférieure ou égale à 2,5 %, de préférence inférieure ou égale à 1,5%.
- La quantité massique de dopant Nb₂O₅ est supérieure ou égale à 0,2 %, et/ou inférieure ou égale à 1,5 %, de préférence inférieure ou égale à 1,0 %.
- Au moins 80 %, de préférence au moins 90 %, voire au moins 99 % ou sensiblement 100 % de la zircone est monoclinique, en pourcentages en masse.
- La quantité massique de silice SiO₂ est supérieure ou égale à 6,5 %, de préférence supérieure ou égale à 7 %. Elle peut être inférieure ou égale à 10 %, voire inférieure ou égale à 9 %. En variante, elle peut être également supérieure à 8,5 %, voire 9 %, voire 10 %, voire même supérieure à 10,1 % ou à 10,5 %.
- La quantité massique d'oxyde de bore B₂O₃ est supérieure ou égale à 0,2 %, de préférence supérieure ou égale à 0,3 % et/ou inférieure ou égale à 1,0 %, de préférence inférieure ou égale à 0,8 %.
- La quantité massique d'oxyde de sodium Na₂O est inférieure ou égale à 0,1 %, de préférence inférieure ou égale à 0,05 %, de préférence encore inférieure ou égale à 0,03 %.
- La quantité massique d'alumine Al₂O₃ est de préférence supérieure ou égale à 0,4, de préférence 0,5 % et/ou de préférence inférieure ou égale à 1 %, de préférence 0,8 %.
- La quantité massique d'oxyde de barium BaO est inférieure ou égale à 0,6 %, de préférence inférieure à 0,5 %.
- Les espèces autres que ZrO₂ + HfO₂, SiO₂, B₂O₃, Al₂O₃, Y₂O₃, BaO, Ta₂O₅ et Nb₂O₅ représentent, en masse, moins de 1,5 %, de préférence moins de 1 %, de préférence encore moins de 0,5 %.
- Les espèces autres que ZrO₂ + HfO₂, SiO₂, B₂O₃, Al₂O₃, Y₂O₃, Ta₂O₅ et Nb₂O₅ représentent, en masse, moins de 1,5 %, de préférence moins de 1 %, de préférence encore moins de 0,5 %.
- Le complément massique à 100 % est constitué par des impuretés, la teneur totale en impuretés étant de préférence inférieure à 0,5 %.

Selon un autre aspect, l'invention concerne un produit réfractaire fondu et coulé à forte teneur en zircone comportant,
- ZrO₂ + HfO₂ : > 85 %
- SiO₂ : 6 % à 12 %
- Y₂O₃ : ≤ 0,2 %,
- un dopant choisi dans les mélanges de Nb₂O₅ et Ta₂O₅, avec Ta₂O₅ < 1 %, en pourcentage massique sur la base des oxydes.

De préférence, le rapport molaire ZrO₂ / (Nb₂O₅+Ta₂O₅) est supérieur à 200 et inférieur à 350.

Le produit réfractaire selon l'invention peut alors encore comporter une ou plusieurs des caractéristiques optionnelles suivantes.
- La quantité totale de dopant est supérieure ou égale à 0,2 %, de préférence supérieure ou égale à 0,25 % et/ou inférieure ou égale à 5 %, inférieure ou égale à 3 %, inférieure ou égale à 1 %, inférieure ou égale à 0,8 %, inférieure ou égale à 0,5 %, de préférence inférieure ou égale à 0,4 % , en pourcentages molaires sur la base des oxydes.
- La quantité massique de dopant Nb₂O₅ est supérieure ou égale à 0,1 %, de préférence supérieure ou égale à 0,2 %, et/ou inférieure ou égale à 1,5 %, de préférence inférieure ou égale à 1,0 %.
- Au moins 80 %, de préférence au moins 90 %, voire au moins 99 % ou sensiblement 100 % de la zircone est monoclinique non stabilisée, en pourcentages en masse.
- La quantité massique de silice SiO₂ est supérieure ou égale à 6,5 %, de préférence supérieure ou égale à 7 %. Elle peut être inférieure ou égale à 10 %, voire inférieure ou égale à 9 %. En variante, elle peut être également supérieure à 8,5 %, voire 9 %, voire 10 %, voire même supérieure à 10,1 % ou à 10,5 %.
- La quantité massique d'oxyde de bore B₂O₃ est supérieure ou égale à 0,2 %, de préférence supérieure ou égale à 0,3 % et/ou inférieure ou égale à 1,0 %, de préférence inférieure ou égale à 0,8 %.
- La quantité massique d'oxyde de sodium Na₂O est inférieure ou égale à 0,1 %, de préférence inférieure ou égale à 0,05 %, de préférence encore inférieure ou égale à 0,03 %.
- La quantité massique d'alumine Al₂O₃ est de préférence supérieure ou égale à 0,4, de préférence 0,5 % et/ou de préférence inférieure ou égale à 1 %, de préférence 0,8 %.
- La quantité massique d'oxyde de barium BaO est inférieure ou égale à 0,6 %, de préférence inférieure à 0,5 %.
- Les espèces autres que ZrO₂ + HfO₂, SiO₂, B₂O₃, Al₂O₃, Y₂O₃, BaO, Ta₂O₅ et Nb₂O₅ représentent, en masse, moins de 1,5 %, de préférence moins de 1 %, de préférence encore moins de 0,5 %.
- Les espèces autres que ZrO₂ + HfO₂, SiO₂, B₂O₃, Al₂O₃, Y₂O₃, Ta₂O₅ et Nb₂O₅ représentent, en masse, moins de 1,5 %, de préférence moins de 1 %, de préférence encore moins de 0,5 %.
- Le complément massique à 100 % est constitué par des impuretés, la teneur totale en impuretés étant de préférence inférieure à 0,5 %.

L'invention concerne également un four de fusion de verre comportant un produit réfractaire selon l'invention, en particulier dans les régions destinées à être en contact avec le verre fondu.

L'invention concerne enfin un procédé de fabrication d'un produit réfractaire selon l'invention, comprenant les étapes successives suivantes :
a) mélange de matières premières, avec introduction d'un dopant, de manière à former une charge de départ,
b) fusion de ladite charge de départ jusqu'à obtention d'un liquide en fusion,
c) coulage et solidification dudit liquide en fusion, par refroidissement contrôlé, de manière à obtenir un produit réfractaire,
ce procédé étant remarquable en ce que lesdites matières premières sont choisies de manière que ledit produit réfractaire soit conforme à l'invention.

Sauf mention contraire, tous les pourcentages de la présente description sont des pourcentages massiques sur la base des oxydes.

Dans les produits fondus et coulés selon l'invention, la forte teneur en zircone, c'est-à-dire ZrO₂ > 85 % en masse, permet de répondre aux exigences de haute résistance à la corrosion sans coloration du verre produit ni génération de défauts nuisibles à la qualité de ce verre.

L'oxyde d'hafnium, HfO₂, présent dans le produit selon l'invention est l'oxyde d'hafnium naturellement présent dans les sources de zircone. Sa teneur massique dans le produit selon l'invention est donc inférieure ou égale à 5 %, généralement inférieure ou égale à 2 %.

La présence de silice est nécessaire à la formation d'une phase vitreuse intergranulaire permettant d'accommoder de manière efficace les variations de volume de la zircone lors de sa transformation allotropique réversible, c'est-à-dire lors du passage de la phase monoclinique à la phase tétragonale.

Les inventeurs ont découvert qu'une quantité massique de silice supérieure à 6 % permet d'atteindre des résistivités électriques plus élevées.

En revanche, l'ajout de silice ne doit pas dépasser 12 % en masse car, se faisant au détriment de la teneur en zircone, la résistance à la corrosion s'en trouverait diminuée de manière trop importante. De plus, une trop forte quantité de silice pourrait générer des défauts dans le verre par lâcher de pierres (morceaux de produit réfractaire résultant d'une perte de cohésion du produit), ce qui est considéré comme un mauvais comportement à l'application.

La présence d'alumine favorise la formation d'une phase vitreuse stable et améliore la coulabilité des produits dans le moule. Une teneur excessive entraîne une instabilité de la phase vitreuse (formation de cristaux), ce qui a un impact négatif sur la faisabilité. De préférence, la teneur massique en alumine doit donc rester inférieure à 1,0%.

De préférence, le produit selon l'invention comporte une quantité massique de B₂O₃ supérieure à 0,3 %, et de préférence supérieure à 0,4 %. La faisabilité en est améliorée. La teneur en B₂O₃ doit de préférence rester inférieure ou égale à 1,0 %. Avantageusement, la formation de zircon dans le produit en est limitée.

L'oxyde d'yttrium Y₂O₃ a un effet défavorable sur la résistivité électrique. Sa teneur massique doit donc être inférieure à 0,2 %.

La présence de dopant est nécessaire dans les produits de l'invention pour améliorer la résistivité électrique. Cependant, la teneur totale des oxydes de dopant ne doit pas être trop élevée pour que le pourcentage de zircone soit maintenu à un niveau suffisant pour assurer une bonne résistance à la corrosion par le verre en fusion et conserver une bonne stabilité de la phase vitreuse.

Les inventeurs ont constaté que les dopants Nb₂O₅ et Ta₂O₅ ont un effet sensiblement identique à quantités molaires identiques. Sans être liés par une théorie, les inventeurs expliquent cet effet par le rôle des dopants vis-à-vis des lacunes en oxygène de la zircone. Les dopants compenseraient en effet chacun une lacune en oxygène.

Ainsi 1,66 grammes de Ta₂O₅ ont un effet sensiblement équivalent à un gramme de Nb₂O₅.

Les inventeurs ont constaté que la résistivité électrique est particulièrement augmentée lorsque le rapport entre le pourcentage molaire de zircone et le pourcentage molaire de dopant est compris entre 200 et 350. Cette plage correspond à un dopage optimal des grains de zircone. Elle indique la quantité de dopant nécessaire et suffisante pour combler les lacunes d'oxygène.

Le complément massique à 100 % dans la composition du produit selon l'invention est constitué par les autres espèces. De préférence, les « autres espèces » ne sont que des impuretés.

Par « impuretés », on entend les constituants inévitables, introduits nécessairement avec les matières premières ou résultant de réactions avec ces constituants. L'oxyde d'hafnium présent dans les sources de zircone n'est pas considéré comme une impureté. Les impuretés ne sont pas des constituants nécessaires, mais seulement tolérés.

On peut citer les oxydes alcalins, en particulier l'oxyde de sodium Na₂O et l'oxyde de potassium K₂O, qui peuvent être tolérés mais ne doivent pas, de préférence, dépasser 0,2 % en masse, de préférence 0,1 %, de préférence encore n'être présents que sous forme de traces. Sinon la résistivité électrique serait dégradée en raison de la conductivité accrue de la phase vitreuse. Les oxydes de fer, de titane et de phosphore sont connus pour être néfastes et leur teneur doit être limitée à des traces introduites à titre d'impuretés avec les matières premières. De préférence, la quantité massique de Fe₂O₃ + TiO₂ est inférieure à 0,55 % et celle de P₂O₅ est inférieure à 0,05 %.

Le produit de l'invention est constitué de grains de zircone monoclinique non stabilisée entourés par une phase vitreuse constituée principalement de silice. Sans être liés par une théorie, les inventeurs considèrent que la composition du produit selon l'invention permet de maximiser la résistivité électrique à la fois des grains de zircone et de la phase vitreuse en obtenant un effet synergique de tous les constituants.

Un produit selon l'invention peut être fabriqué suivant les étapes a) à c) décrites ci-dessous :
a) mélange de matières premières, avec introduction d'un dopant, de manière à former une charge de départ,
b) fusion de ladite charge de départ jusqu'à obtention d'un liquide en fusion,
c) solidification dudit liquide en fusion, par refroidissement contrôlé de manière à obtenir un produit réfractaire selon l'invention.

A l'étape a), l'ajout de dopant est réalisé de manière à garantir une teneur en dopant dans le produit fini conforme à l'invention.

A l'étape b), la fusion est de préférence réalisée grâce à l'action combinée d'un arc électrique assez long, ne produisant pas de réduction, et d'un brassage favorisant la réoxydation des produits. La fusion s'opère à une température supérieure à 2300°C, de préférence comprise entre 2400 et 2500°C.

Pour minimiser la formation de nodules d'aspect métallique et éviter la formation de fentes ou fendillements dans le produit final, il est préférable d'opérer la fusion dans des conditions oxydantes.

Préférentiellement, on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes.

A l'étape c), le refroidissement est de préférence effectué à la vitesse d'environ 10°C par heure.

Tout procédé conventionnel de fabrication de produits fondus à base de zircone destinés à des applications dans des fours de fusion de verre peut être mis en oeuvre, pourvu que la composition de la charge de départ permette d'obtenir des produits présentant une composition conforme à celle du produit selon l'invention.

Les exemples non limitatifs suivants sont donnés dans le but d'illustrer l'invention.

Dans ces exemples, on a employé les matières premières suivantes :
- de la zircone contenant principalement, en moyenne massique, 98,5 % de ZrO₂ + HfO₂, 0,2 % de SiO₂ et 0,02 % de Na₂O,
- du sable de zircon à 33 % de silice,
- de l'alumine de type AC44 vendue par la société Pechiney et contenant en moyenne 99,4 % d'alumine Al₂O₃,
- des oxydes de barium, bore, yttrium, tantale Ta₂O₅ et niobium Nb₂O₅ de pureté supérieure à 99 %.

Les exemples ont été préparés selon le procédé classique de fusion en four à arc puis coulés pour obtenir des blocs de format 220x450x150mm.

L'analyse chimique des produits obtenus est donnée dans le tableau 1 ; il s'agit d'une analyse chimique moyenne, donnée en pourcentages massiques à l'exception de la colonne indiquant le pourcentage molaire de la somme des oxydes Ta₂O₅ et Nb₂O₅.

Dans ce tableau, une case vide correspond à une quantité inférieure ou égale à 0,05 % massique.

Ainsi la teneur en Na₂O n'est pas indiquée parce qu'elle est toujours inférieure à 0,05 % massique.

Le rapport Z/D correspond au rapport du pourcentage molaire de zircone sur le pourcentage molaire de la somme des oxydes Ta₂O₅ et Nb₂O₅.

On a extrait sur les différents exemples de blocs réalisés des barreaux cylindriques de produit de 30 mm de diamètre et de 30 mm de hauteur. Ces barreaux ont été soumis à une différence de potentiel de 1 volt à une fréquence de 100 Hertz à 1500 °C pour réaliser des mesures de résistivité électrique R.

**Tableau 1**

| | ZrO₂ | SiO₂ | B₂O₃ | Al₂O₃ | Nb₂O₅ | Ta₂O₅ | Y₂O₃ | BaO | Ta₂O₅+N b₂O₅ (mol %) | Z/D | R (Ω.c m) |
|---|---|---|---|---|---|---|---|---|---|---|---|
| 1 | 91,3 | 6,1 | 0,65 | 0,93 | 0,38 | 0,48 | 0,20 | | 0,29 | 294 | 675 |
| 2 | 91,3 | 6,1 | 0,60 | 0,95 | 0,40 | 0,49 | 0,19 | | 0,30 | 283 | 620 |
| 3 | 91,4 | 6,1 | 0,65 | 0,90 | 0,37 | 0,30 | 0,20 | | 0,24 | 358 | 347 |
| 4 | 91,3 | 6,7 | 0,60 | 0,50 | 0,51 | | 0,20 | 0,24 | 0,22 | 386 | 434 |
| 5 | 91,3 | 7,0 | 0,60 | 1,10 | | | | | | | 95 |
| 6 | 90,3 | 7,1 | 0,60 | 0,79 | 0,33 | 0,76 | 0,20 | | 0,34 | 247 | 507 |
| 7 | 91,1 | 7,5 | 0,60 | 0,44 | | | 0,17 | 0,13 | | | 253 |
| 8 | 90,0 | 8,1 | 0,41 | 0,54 | 0,74 | | 0,20 | | 0,32 | 262 | 780 |
| 9 | 89,8 | 8,3 | 0,60 | 1,20 | | | 0,10 | | | | 165 |
| 10 | 89,2 | 8,3 | 0,49 | 0,80 | 0,31 | 0,70 | 0,20 | | 0,31 | 263 | 918 |
| 11 | 89,8 | 8,4 | 0,48 | 0,44 | 0,66 | | 0,20 | | 0,28 | 294 | 746 |
| 12 | 89,3 | 8,9 | 0,49 | 0,47 | 0,71 | | 0,20 | | 0,30 | 271 | 857 |
| 13 | 87,6 | 9,0 | 0,65 | 0,60 | 0,37 | 0,61 | 0,19 | 1,10 | 0,31 | 256 | 861 |
| 14 | 88,6 | 9,3 | 0,54 | 0,50 | 0,76 | | 0,20 | 0,13 | 0,32 | 252 | 899 |

Ces exemples permettent de constater que le respect du critère 200 ≤ Z/D ≤ 350 permet d'atteindre des résistivités électriques R supérieures à 500 Ω.cm, en particulier pour des teneurs massiques en silice inférieure à 7,0 %. Pour des teneurs en silice supérieures à 7,0 %, de telles résistivités sont avantageusement possibles même sans respecter ce critère.

Par ailleurs, d'autres essais ont permis de vérifier que les autres propriétés reconnues pour les matériaux à forte teneur en zircone, en particulier la résistance à la corrosion par le verre, ne sont pas dégradées par la présence d'un dopant selon l'invention.

Bien entendu, la présente invention n'est pas limitée aux modes de réalisation décrits et représentés fournis à titre d'exemples illustratifs et non limitatifs.

## Revendications

1. Produit réfractaire fondu et coulé à forte teneur en zircone, comportant, en pourcentages massiques sur la base des oxydes :
- ZrO₂ + HfO₂ : > 85 %
- SiO₂ : 6% à 12%
- Al₂O₃ : 0,4% à 1%
- Y₂O₃ : ≤ 0,2 %,
- un dopant choisi dans le groupe formé par Nb₂O₅, Ta₂O₅ et leurs mélanges.

2. Produit réfractaire selon la revendication 1, dans lequel le rapport molaire ZrO₂/ (Nb₂O₅+Ta₂O₅) est compris entre 200 et 350.

3. Produit réfractaire selon l'une quelconque des revendications précédentes, dans lequel la quantité massique d'oxyde de sodium Na₂O est inférieure ou égale à 0,1 %.

4. Produit réfractaire selon l'une quelconque des revendications précédentes, dans lequel la quantité massique d'oxyde de barium BaO est inférieure ou égale à 0,6 %.

5. Produit réfractaire selon l'une quelconque des revendications précédentes, dans lequel la quantité massique de dopant Ta₂O₅ est supérieure ou égale à 0,1 % et/ou la quantité massique de dopant Nb₂O₅ est supérieure ou égale à 0,1 %.

6. Produit réfractaire selon l'une quelconque des revendications précédentes, dans lequel la quantité massique de dopant Ta₂O₅ est supérieure ou égale à 0,2 % et/ou la quantité massique de dopant Nb₂O₅ est supérieure ou égale à 0,2 %.

7. Produit réfractaire selon l'une quelconque des revendications précédentes, dans lequel la quantité massique de dopant Ta₂O₅ est inférieure ou égale à 2,5 % et/ou la quantité massique de dopant Nb₂O₅ est inférieure ou égale à 1,5 %.

8. Produit réfractaire selon l'une quelconque des revendications précédentes, dans lequel la quantité massique de dopant Ta₂O₅ est inférieure ou égale à 1,5 % et/ou la quantité massique de dopant Nb₂O₅ est inférieure ou égale à 1,0 %.

9. Produit réfractaire selon l'une quelconque des revendications précédentes, dans lequel la quantité massique de silice SiO₂ est supérieure ou égale à 6,5 % et/ou inférieure ou égale à 10 %.

10. Produit réfractaire selon l'une quelconque des revendications précédentes, dans lequel la quantité massique d'alumine Al₂O₃ est supérieure ou égale à 0,5 % et inférieure ou égale à 0,8 %.

11. Produit réfractaire selon l'une quelconque des revendications précédentes, comportant en outre du B₂O₃, la teneur en B₂O₃ étant supérieure ou égale à 0,2 % et inférieure ou égale à 1,0 %.

12. Produit réfractaire selon l'une quelconque des revendications précédentes présentant la composition massique suivante, avec ZrO₂ + HfO₂ et les impuretés comme complément à 100 % :
- SiO₂ : 7% à 9%
- B₂O3 : 0,4% à 0,8%
- Al₂O₃ : 0,5 % à 0,8 %
- Y₂O₃ : ≤ 0,2 %
- entre 0,2 % et 1,5 % de Ta₂O₅ et/ou entre 0,2 % et 1,0 % de Nb₂O₅.

13. Produit réfractaire selon l'une quelconque des revendications précédentes, dans lequel la quantité totale de dopant est inférieure ou égale à 0,5 %, et/ou supérieure ou égale à 0,2 % en pourcentage molaire sur la base des oxydes.

14. Produit réfractaire selon la revendication précédente, dans lequel la quantité totale de dopant est inférieure ou égale à 0,4 %, en pourcentage molaire sur la base des oxydes.

15. Four de fusion du verre, **caractérisé en ce qu'**il comporte un produit réfractaire selon l'une quelconque des revendications précédentes.

## Patentansprüche

1. Feuerfest- Produkt, welches geschmolzen und gegossen ist, bei einem hohen Zirkonoxid- Gehalt, enthaltend in Massenprozenten auf der Basis von Oxiden:
- ZrO₂ + HfO₂ : > 85%
- SiO₂ : 6% bis 12%
- Al₂O₃ : 0,4% bis 1%
- Y₂O₃ : ≤ 0,2%
- ein Dotierungselement ausgewählt aus der Gruppe, die durch Nb₂O₅, Ta₂O₅ und ihren Mischungen gebildet ist.

2. Feuerfest- Produkt nach Anspruch 1, in welchem das molare Verhältnis ZrO₂ / (Nb₂O₅ + Ta₂O₅) zwischen 200 und 350 liegt.

3. Feuerfest- Produkt nach einem der vorhergehenden Ansprüche, in welchem die Massen- Quantität von Natrium-Oxid Na₂O kleiner oder gleich 0,1% ist.

4. Feuerfest- Produkt nach einem der vorhergehenden Ansprüche, in welchem die Massen-Quantität von Barium-Oxid BaO kleiner oder gleich 0,6% ist.

5. Feuerfest- Produkt nach einem der vorhergehenden Ansprüche, in welchem die Massen-Quantität des Dotierungselements Ta₂O₅ größer oder gleich 0,1% und/oder die Massen-Quantität des Dotierungselements Nb₂O₅ größer oder gleich 0,1% ist.

6. Feuerfest- Produkt nach einem der vorhergehenden Ansprüche, in welchem die Massen-Quantität des Dotierungselements Ta₂O₅ größer oder gleich 0,2% und/oder die Massen- Quantität des Dotierungselements Nb₂O₅ größer oder gleich 0,2% ist.

7. Feuerfest- Produkt nach einem der vorhergehenden Ansprüche, in welchem die Massen-Quantität des Dotierungselements Ta₂O₅ kleiner oder gleich 2,5% und/oder die Massen-Quantität des Dotierungselements Nb₂O₅ kleiner oder gleich 1,5% ist.

8. Feuerfest- Produkt nach einem der vorhergehenden Ansprüche, in welchem die Massen- Quantität des Dotierungselements Ta₂O₅ kleiner oder gleich 1,5% und/oder die Massen-Quantität des Dotierungselements Nb₂O₅ kleiner oder gleich 1,0 % ist.

9. Feuerfest-Produkt nach einem der vorhergehenden Ansprüche, in welchem die Massen-Quantität an Siliziumoxid SiO₂ größer oder gleich 6,5% und/oder kleiner oder gleich 10% ist.

10. Feuerfest- Produkt nach einem der vorhergehenden Ansprüche, in welchem die Massen-Quantität an Aluminiumoxid Al₂O₃ größer oder gleich 0,5% und kleiner oder gleich 0,8% ist.

11. Feuerfest-Produkt nach einem der vorhergehenden Ansprüche, enthaltend unter anderem B₂O₃, wobei der B₂O₃-Gehalt größer oder gleich 0,2% und kleiner oder gleich 1,0% ist.

12. Feuerfest- Produkt nach einem der vorhergehenden Ansprüche, welches folgende Massen- Zusammensetzung aufweist, mit ZrO₂ + HfO₂ und Verunreinigungen als Komplement zu 100%:
- SiO₂ : 7% bis 9%
- B₂O₃ : 0,4% bis 0,8%
- Al₂O₃ : 0,5% bis 0,8%
- Y₂O₃ : ≤ 0,2%
- zwischen 0,2% und 1,5% an Ta₂O₅ und/oder zwischen 0,2% und 1,0% an Nb₂O₅.

13. Feuerfest-Produkt nach einem der vorhergehenden Ansprüche, in welchem die gesamte Menge an Dotierungselementen kleiner oder gleich 0,5% ist und/oder größer oder gleich 0,2% in Molar-Prozenten auf der Basis von Oxiden.

14. Feuerfest-Produkt nach dem vorhergehenden Anspruch, in welchem die Gesamtmenge an Dotierungselementen kleiner oder gleich 0,4% in Molar-Prozenten auf der Basis von Oxiden ist.

15. Glasschmelz-Ofen, charakterisiert dadurch, dass er ein Feuerfest-Produkt gemäß einem der vorhergehenden Ansprüche beinhaltet.

## Claims

1. A fused cast refractory product with a high zirconia content comprising, as a percentage by weight based on the oxides:
• ZrO₂ + HfO₂ : > 85%;
• SiO₂ : 6% to 12%;
• Al₂O₃ : 0.4% to 1%;
• Y₂O₃ : ≤ 0.2%;
• a dopant selected from the group formed by Nb₂O₅, Ta₂O₅, and mixtures thereof.

2. A refractory product according to claim 1, in which the ZrO₂/ (Nb₂O₅ + Ta₂O₅) molar ratio is in the range 200 to 350.

3. A refractory product according to either preceding claim, in which the quantity by weight of sodium oxide Na₂O is 0.1% or less.

4. A refractory product according to any preceding claim, in which the quantity by weight of barium oxide BaO is 0.6% or less.

5. A refractory product according to any preceding claim, in which the quantity by weight of dopant Ta₂O₅ is 0.1% or more and/or the quantity by weight of dopant Nb₂O₅ is 0.1% or more.

6. A refractory product according to any preceding claim, in which the quantity by weight of dopant Ta₂O₅ is 0.2% or more and/or the quantity by weight of dopant Nb₂O₅ is 0.2% or more.

7. A refractory product according to any preceding claim, in which the quantity by weight of dopant Ta₂O₅ is 2.5% or less and/or the quantity by weight of dopant Nb₂O₅ is 1.5% or less.

8. A refractory product according to any preceding claim, in which the quantity by weight of dopant Ta₂O₅ is 1.5% or less and/or the quantity by weight of dopant Nb₂O₅ is 1.0% or less.

9. A refractory product according to any preceding claim, in which the quantity by weight of silica SiO₂ is 6.5% or more and/or 10% or less.

10. A refractory product according to any preceding claim, in which the quantity by weight of alumina Al₂O₃ is 0.5% or more and 0.8% or less.

11. A refractory product according to any preceding claim, further comprising B₂O₃, the quantity of B₂O₃ being 0.2% or more and 1.0% or less.

12. A refractory product according to any preceding claim, having the following composition by weight, with ZrO₂ + HfO₂ and the impurities as the complement to 100%:
• SiO₂ : 7% to 9%;
• B₂O₃ : 0.4% to 0.8%;
• Al₂O₃ : 0.5% to 0.8%;
• Y₂O₃ : ≤ 0.2%;
• in the range 0.2% to 1.5% of Ta₂O₅ and/or in the range 0.2% to 1.0% of Nb₂O₅.

13. A refractory product according to any preceding claim, in which the total quantity of dopant is 0.5% or less and/or 0.2% or more as a molar percentage based on the oxides.

14. A refractory product according to the preceding claim, in which the total quantity of dopant is 0.4% or less as a molar percentage based on the oxides.

15. A glass-melting furnace, **characterized in that** it comprises a refractory product in accordance with any preceding claim.
